# EUROPEAN PATENT SPECIFICATION

(11) **EP 3 599 565 B1**
(45) Date of publication and mention of the grant of the patent: **27.01.2021**
(21) Application number: 19186299.4
(22) Date of filing: 15.07.2019
(51) Int. Cl.: G06F 21/56, G05B 23/02, G06Q 10/06

(54) **RISK ANALYSIS SUPPORT DEVICE, RISK ANALYSIS SUPPORT METHOD, AND RISK ANALYSIS SUPPORT PROGRAM**
RISIKOANALYSEUNTERSTÜTZUNGSVORRICHTUNG, RISIKOANALYSEUNTERSTÜTZUNGSVERFAHREN UND RISIKOANALYSEUNTERSTÜTZUNGSPROGRAMM
DISPOSITIF DE SUPPORT D'ANALYSE DE RISQUES, PROCÉDÉ DE SUPPORT D'ANALYSE DE RISQUES ET PROGRAMME DE SUPPORT D'ANALYSE DE RISQUES

(30) Priority: 27.07.2018 JP 2018141888
(43) Date of publication of application: 29.01.2020
(73) Proprietor: Hitachi, Ltd., Tokyo 100-8280 (JP)
(72) Inventor: TAKESHITA, Wakana, Tokyo, 100-8280 (JP); MORI, Takuro, Tokyo, 100-8280 (JP)
(74) Representative: MERH-IP Matias Erny Reichl Hoffmann Patentanwälte PartG mbB

(56) References cited:
- US-A1- 2016 057 159
- ASIM ABDULKHALEQ ET AL: "A Systematic and Semi-Automatic Safety-Based Test Case Generation Approach Based on Systems-Theoretic Process Analysis", ARXIV.ORG, CORNELL UNIVERSITY LIBRARY, 201 OLIN LIBRARY CORNELL UNIVERSITY ITHACA, NY 14853, 9 December 2016 (2016-12-09), XP080738172,

## Description

### BACKGROUND OF THE INVENTION

The present invention relates to a risk analysis support device, a risk analysis support method, and a risk analysis support program.

There is a risk analysis method that identifies a risk hidden in a system or product that could lead to an accident. As a representative risk analysis method, there are Failure Mode and Effect Analysis (FMEA) and Fault Tree Analysis (FTA). Many existing methods, including FMEA and FTA, identify a risk leading to an accident of a system based on a failure or a threat of a single component.

Knowledge of the previously identified failure or threat of a single component can reduce time required for risk analysis. JP-A-2009-140041 (Patent Literature 1) makes it possible to identify a risk in an information system based on system configuration information by using common threat countermeasure knowledge that defines threats and countermeasures that are commonly applicable to a plurality of systems. As a result, burden on an executor that performs the risk analysis is reduced since it is not necessary to identify the risk caused by a failure or threat of a single component from scratch for each individual system.

On the other hand, in recent years, with the complication of the system, a risk leading to an accident is caused even though such a failure or a threat of a single component is not generated. As an example, even though individual components are operating normally, there is an event in which the whole system falls into a non-secure state due to interaction of the system or the like. Such a risk cannot be identified by analysis methods such as performing analysis based on the failure or the threat of a single component.

STAMP/STPA disclosed in Nancy G. Leveson, "Engineering a Safer World", The MIT Press (Non-Patent Literature 1) analyzes a flow of control in a system, and is an analysis method that enables identification of a risk leading to an accident that is not caused by a failure of a single component by describing an event leading to an accident as a scenario. STAMP/STPA is a top-down analysis method and the analysis is performed in the following four steps. First, a flow of control in the system is illustrated. Next, an accident to be analyzed is determined. Next, non-secure control leading to an accident is identified using four guide words. Finally, a scenario leading to non-secure control is identified using 13 hint words.

Here, a case will be considered in which a scenario leading to an accident without a failure or a threat of a single component is identified using a guide word and a hint word. A method of describing the scenario identified by the guide word and the hint word is left to the executor that performs the risk analysis and is often described in natural languages. When described in natural languages, the analysis takes time since it is difficult to use a scenario identified in other systems in the past and the scenario has to be identified from scratch even for similar systems. In addition, there is a possibility that a scenario that could be analyzed in the past cannot be identified since the executor that performs the risk analysis cannot recall the scenario from the guide word.

The method of Patent Literature 1 can prevent neglect of a threat that could be analyzed in the past by using knowledge describing the threat common to a plurality of systems. However, since it is based on the common threat countermeasure knowledge, it is not possible to extract a risk leading to an accident by a flow of control without causing a failure or a threat of a single component.

The method of Non-Patent Literature 1 prompts an analyst' s recall with 4 guide words and 13 hint words . However, it takes time to perform analysis since the recalled scenario is described in natural languages, a past analysis result is difficult to use, and the analysis is executed from scratch. In addition, it is possible for the executor that performs the risk analysis to neglect scenarios that could be identified in the past. US 2016/057159 A1 discloses a semantic-based approach that classifies Android malware via dependency graphs . To battle transformation attacks, a weighted contextual API dependency graph is extracted as program semantics to construct feature sets. To fight against malware variants and zero-day malware, graph similarity metrics are used to uncover homogeneous application behaviors while tolerating minor implementation differences.

### SUMMARY OF THE INVENTION

In order to solve the above problems, an object of the invention is to provide a risk analysis support device, a risk analysis support method, and a risk analysis support program capable of preventing neglect by an executor that performs a risk analysis and shortening analysis time.

As an example, the risk analysis support device of the invention includes an input unit which is connected with a database and receives an input of a risk analysis target represented in a form of a control structure diagram, the database accumulating: (i) the control structure diagram representing the risk analysis target by a block and a control showing a relationship between a block executing control and a passive block controlled by the executing block, and/or (ii) a hazard scenario which corresponds to the control structure diagram and is represented by a tree structure in which each node has a correspondence relationship with the block or the control of the control structure diagram; and/or a search unit which searches in the database for a similar control structure diagram including a subset of controls that matches or is similar to a subset of controls extracted from the control structure diagram whose input is received by the input unit, and acquires from the database a hazard scenario including a node having a correspondence relationship with a subset of controls included in the similar control structure diagram; and/or an output unit which outputs the hazard scenario acquired by the search unit in a tree structure.

According to the invention, it is possible to prevent neglect by an executor that performs a risk analysis and shorten analysis time.

### BRIEF DESCRIPTION OF THE DRAWINGS

FIG. 1 is a block diagram showing an example of a configuration of a risk analysis support device according to a first embodiment;
FIG. 2 shows an example of a control structure diagram input screen according to the first embodiment;
FIG. 3 shows an example of a recommendation result display screen according to the first embodiment;
FIG. 4 shows an example of a scenario input screen according to the first embodiment;
FIG. 5 shows an example of control structure diagram configuration information according to the first embodiment;
FIG. 6 shows an example of control loop configuration information according to the first embodiment;
FIG. 7 shows an example of control configuration information according to the first embodiment;
FIG. 8 shows an example of block configuration information according to the first embodiment;
FIG. 9 shows an example of scenario tree configuration information according to the first embodiment;
FIG. 10 shows an example of UCA node configuration information according to the first embodiment;
FIG. 11 shows an example of gate configuration information according to the first embodiment;
FIG. 12 shows an example of HCF node configuration information according to the first embodiment;
FIG. 13 shows an example of UCA node configuration information (template) according to the first embodiment;
FIG. 14 shows an example of HCF node configuration information (template) according to the first embodiment;
FIG. 15 is a flowchart (part 1) showing an example of processing performed by a scenario recommendation unit according to the first embodiment;
FIG. 16 is a flowchart (part 2) showing the example of processing performed by the scenario generation unit according to the first embodiment;
FIG. 17 is a flowchart showing an example of recommendation tree generation processing according to the first embodiment;
FIG. 18 is a flowchart showing an example of recommendation tree display processing according to the first embodiment;
FIG. 19 is a flowchart showing an example of a scenario capture processing according to the first embodiment;
FIG. 20 shows an example of a similarity calculation method according to the first embodiment;
FIG. 21 is a block diagram showing an example of a configuration of a risk analysis support device according to a second embodiment;
FIG. 22 is a flowchart showing an example of processing of a scenario recommendation unit according to the second embodiment; and
FIG. 23 shows an example of a computer that realizes the risk analysis support device.

### DESCRIPTION OF EMBODIMENTS

Embodiments of the invention will be described below with reference to the drawings. The same reference numerals are given to the same configurations and the same processing, and descriptions thereof will be omitted. In addition, some or all of the embodiments and the modifications can be combined within the scope of the technical idea of the invention.

### [First Embodiment]

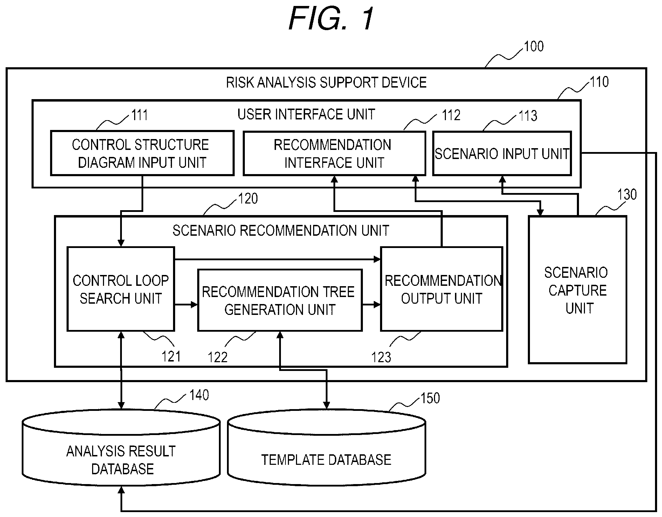

FIG. 1 is a block diagram showing an example of a configuration of a risk analysis support device according to a first embodiment. A risk analysis support device 100 is a system that supports a risk analysis performed by a user.

An analysis result database 140 and a template database 150 are connected to the risk analysis support device 100. The analysis result database 140 accumulates, in a form of a tree structure, a control structure diagram input in the risk analysis executed in the past and a scenario leading to an accident that corresponds to the control structure diagram and is identified by the risk analysis. A scenario represented by a tree structure is hereinafter referred to as a scenario tree. The template database 150 stores the configuration of a tree structure that can be commonly used in a plurality of systems as a template. The template is in the form of a scenario tree in which each node has a guide word number as configuration information.

Note that, the analysis result database 140 and the template database 150 may be integrated into an integrated database.

Further, the risk analysis support device 100 includes a user interface unit 110, a scenario recommendation unit 120, and a scenario capture unit 130. The user interface unit 110 supports information input and information confirmation by the user. The user interface unit 110 is configured with an input device such as a Graphical User Interface (GUI) and a keyboard displayed on a display screen of a display device such as a display.

The scenario recommendation unit 120 recommends a scenario based on the past risk analysis result and the template of the scenario according to the input of the user. The scenario capture unit 130 captures a scenario recommended by the scenario recommendation unit 120 into the user interface unit 110, and provides an environment in which the user can perform analysis based on the recommended result.

The user interface unit 110 includes a control structure diagram input unit 111, a recommendation interface unit 112, and a scenario input unit 113. The user inputs a control structure diagram configured with a control and a block in the control structure diagram input unit 111, confirms the recommendation result and captures the result in the recommendation interface unit 112, and inputs a scenario leading to an accident in the form of a tree structure based on the captured recommendation result in the scenario input unit 113.

The scenario recommendation unit 120 includes a control loop search unit 121, a recommendation tree generation unit 122, and a recommendation output unit 123. When there is a recommendation instruction from the control structure diagram input unit 111, the control loop search unit 121 extracts a control loop from the control structure diagram input to the control structure diagram input unit 111, and searches for a control structure diagram including a control loop similar to the extracted control loop from the analysis result database 140.

Here, the control loop is a subset of controls that influence each other in the control structure diagram. The control loop is only a subset of controls, and the loop may not exist. For example, the control loop is an application range (a subset of blocks and controls to be subjected to the risk analysis) of a hint word. Hereinafter, a control structure diagram including a similar control loop will be referred to as a similar control structure diagram.

The recommendation tree generation unit 122 generates a recommendation tree of a scenario based on a search result of the control loop search unit 121. The recommendation output unit 123 delivers the recommendation tree generated by the recommendation tree generation unit 122 to the recommendation interface unit 112.

The scenario capture unit 130 processes the recommendation tree, in which the user has instructed to capture, among recommendation trees displayed by the recommendation interface unit 112, and displays it on the scenario input unit 113 as a scenario tree of the input control structure diagram. The user can freely rewrite the scenario tree displayed on the scenario input unit 113. The control structure diagram input by the user through the control structure diagram input unit 111 and the scenario tree input by the user through the scenario input unit 113 are accumulated in the analysis result database 140.

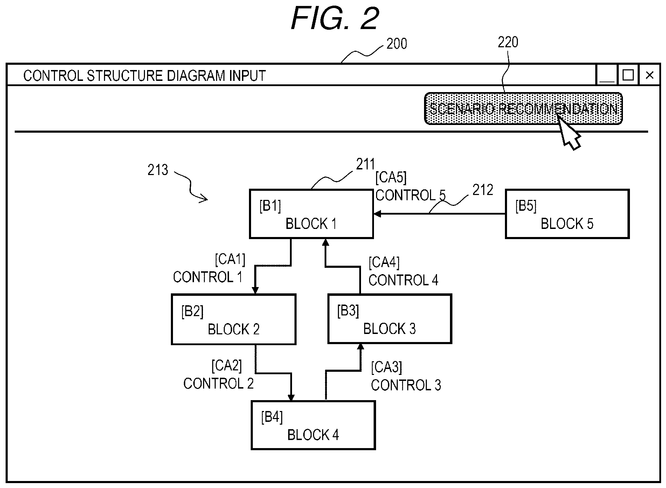

FIG. 2 shows an example of a control structure diagram input screen according to the first embodiment. In a control structure diagram input screen 200 displayed by the control structure diagram input unit 111 in the first embodiment, the user can input a control structure diagram 213 configured with a block 211 and a control 212. The block 211 is not limited since it is determined according to an analysis target such as software, hardware, a system, or a person. The control 212 is a control instruction or a control action from a certain block to a certain block. The control structure diagram 213 input by the user is stored in the analysis result database 140.

When the user inputs the control structure diagram 213 and presses a scenario recommendation button 220, the scenario recommendation unit 120 searches for the similar control structure diagram of the input control structure diagram 213 from the analysis result database 140, generates a recommendation tree based on the search result, and makes a recommendation to the user.

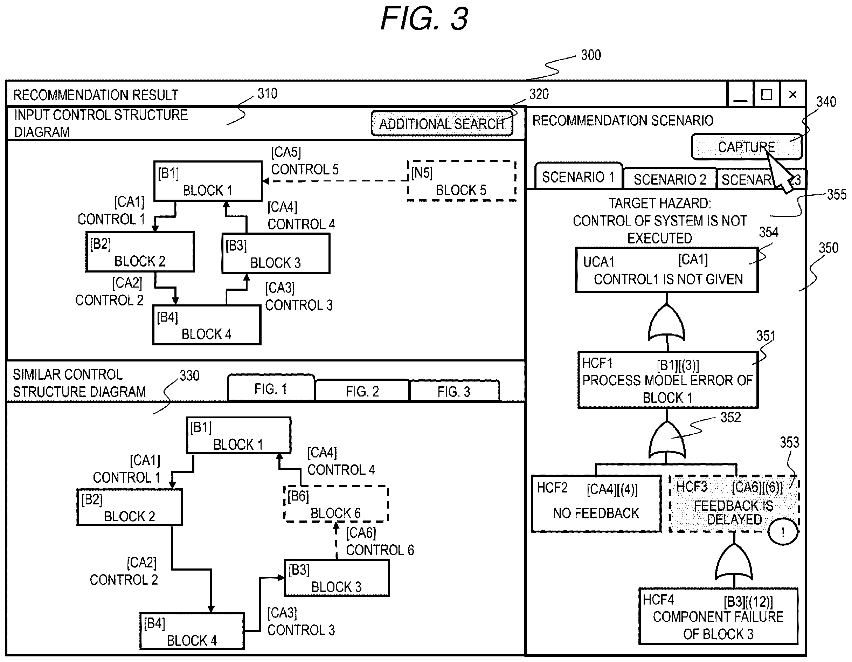

FIG. 3 shows an example of a recommendation result display screen according to the first embodiment. A recommendation result display screen 300 according to the first embodiment includes an input control structure diagram display screen 310, a similar control structure diagram display screen 330, and a recommendation tree display screen 350.

In the input control structure diagram display screen 310, a control structure diagram input by the user on the control structure diagram input screen 200 is displayed. In the similar control structure diagram display screen 330, zero or more similar control structure diagrams searched from the input control structure diagram are displayed.

Blocks and controls not included in the similar control structure diagram are displayed by dotted lines among blocks and controls in the control structure diagram displayed on the input control structure diagram display screen 310. The display by the dotted lines is merely an example as long as blocks and controls not included in the similar control structure diagram can be identified. When the user presses an additional search button 320, a control structure diagram that necessarily includes blocks and controls that are not included in the similar control structure diagram and a related scenario tree can be additionally searched for as a recommendation tree. The control structure diagram additionally obtained by the additional search and the related recommendation tree are displayed on the recommendation tree display screen 350 of the recommendation result screen 300.

Blocks and controls not included in the input control structure diagram are displayed by dotted lines among the blocks and controls in the similar control structure diagram displayed on the similar control structure diagram display screen 330. The display by the dotted lines is merely an example as long as blocks and controls not included in the input control structure diagram can be identified.

On the recommendation tree display screen 350, zero or more recommendation trees generated by the scenario recommendation unit 120 are displayed (zero display means that it is not displayed) . The scenario tree and the recommendation tree are represented by a tree structure configured with a node 351 having a correspondence relationship with a control structure diagram and a guide word number as configuration information, and a gate 352.

In the present embodiment, it is assumed that there are two types of nodes, which are an Unsafe Control Action (UCA) node 354 and a Hazard Control Factor (HCF) node 351. A node serving as a vertex of the scenario tree is the UCA node 354 and the other nodes are HCF nodes 351. Further, in the present embodiment, the gate 352 is an OR gate or an AND gate.

On the recommendation tree display screen 350, an HCF node 353 corresponding to a block or control not existing in the control structure diagram displayed on the input control structure diagram display screen 310 is displayed with a warning among blocks or controls in the similar control structure diagram displayed on the similar control structure diagram display screen 330. The warning may be distinguishable from other nodes by, for example, changing the display line type, changing the color, or giving an annotation.

A hazard 355 caused by the scenario of the scenario tree currently displayed is also displayed on the recommendation tree display screen 350. The hazard is not limited to a direct phenomenon or a state of the system that leads to an accident, and may display an accident that is an analysis target.

When the user presses a capture button 340 on the recommendation tree display screen 350, the displayed recommendation tree can be captured in the analysis result database 140 as a scenario tree corresponding to the input control structure diagram. The scenario tree captured in the analysis result database 140 can be used for a risk analysis on other risk analysis targets from next time onwards.

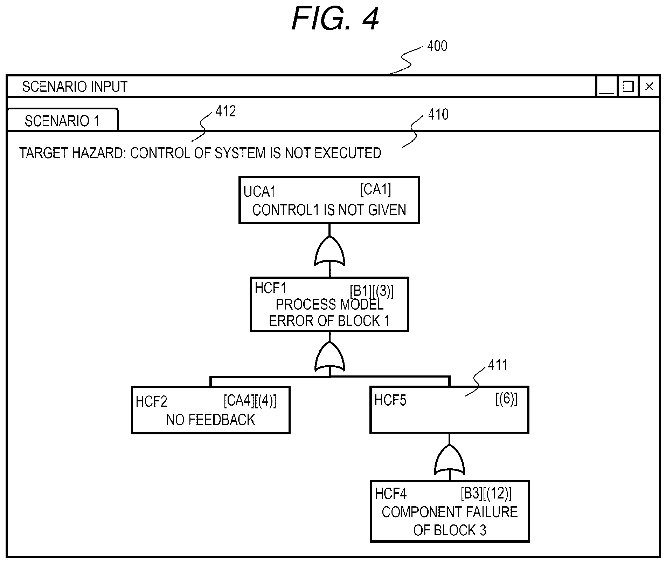

FIG. 4 shows an example of a scenario input screen according to the first embodiment. In a scenario input screen 400 displayed by the scenario input unit 113 in the first embodiment, an input 410 of a scenario tree can be made. Further, the recommendation tree captured by the capture button 340 of the recommendation result display screen 300 is displayed on an input portion 410 of the scenario tree. The node 353 displayed with a warning on the recommendation tree display screen 350 among the captured recommended trees is displayed as an empty node 411 having only a guide word number ("[(6)]" in the example of FIG. 4) as configuration information. The node 411 is one of the nodes under consideration by the executor that performs the risk analysis.

The user can freely rewrite the scenario tree by rewriting contents of nodes, adding and deleting nodes, and adding and deleting gates with respect to the displayed scenario tree. A hazard 412 corresponding to the scenario can also be rewritten by the user according to the system or the analysis target. The scenario tree input by the scenario input screen 400 is stored in the analysis result database 140. Note that, the scenario tree stored in the analysis result database 140 may be immediately stored in the analysis result database 140 when pressing the capture button 340 of the recommendation result display screen 300 without being edited on the scenario input screen 400.

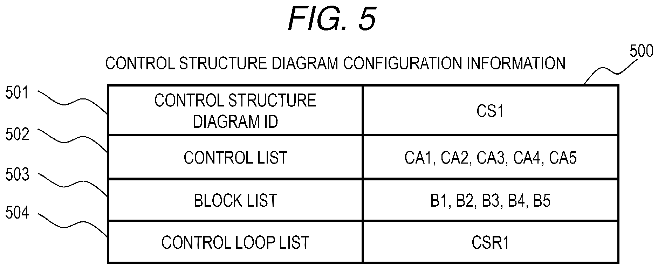

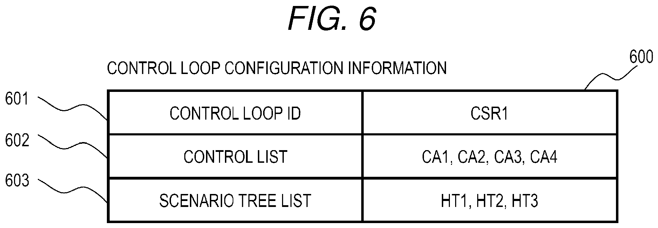

FIG. 5 shows an example of control structure diagram configuration information according to the first embodiment. Control structure diagram configuration information 500 according to the first embodiment has a control structure diagram ID 501 for uniquely identifying a control structure diagram. A control list 502 is a list of controls included in the control structure diagram identified by the control structure diagram ID 501. A block list 503 is a list of blocks included in the control structure diagram identified by the control structure diagram ID 501. A control loop list 504 is a list that shows a control loop included in the control structure diagram identified by the control structure diagram ID 501 with a control loop ID 601 (described below with reference to FIG. 6).

Each control structure diagram is stored in the analysis result database 140 in the data format of the control structure diagram configuration information 500 shown in FIG. 5.

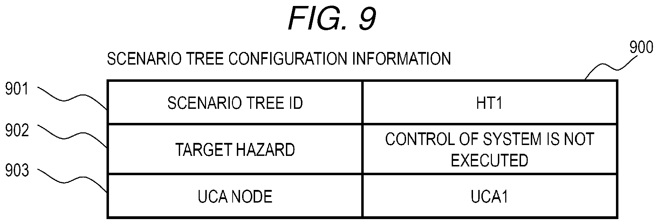

FIG. 6 shows an example of control loop configuration information according to the first embodiment. Control loop configuration information 600 according to the first embodiment has the control loop ID 601 for uniquely identifying a control loop. A control list 602 is a list of controls included in the control loop identified by the control loop ID 601. A scenario tree list 603 is a scenario tree ID (described below with reference to FIG. 9) of the scenario tree corresponding to the control loop identified by the control loop ID 601.

Each control loop is stored in the analysis result database 140 in the data format of the control loop configuration information 600 shown in FIG. 6.

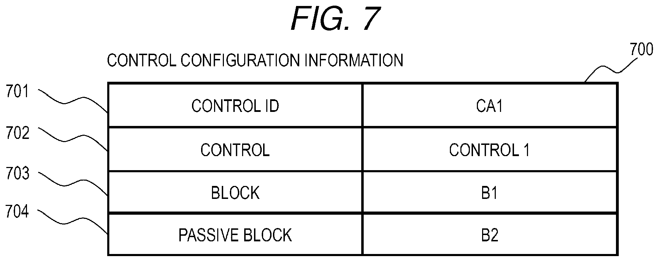

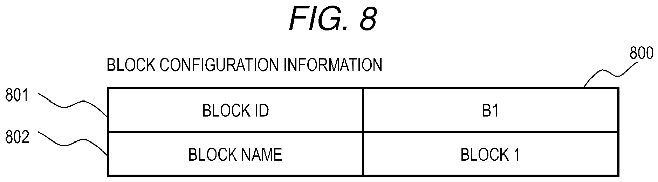

FIG. 7 shows an example of control configuration information of the first embodiment. Control configuration information 700 of the first embodiment has a control ID 701 for uniquely identifying the control. A control 702 is a content of control from a certain block to a certain block. A block 703 is a block ID 801 (described below with reference to FIG. 8) of a block that instructs the control 702 or causes an action of the control 702. A passive block 704 is a block ID 801 (described below with reference to FIG. 8) of a block receiving control or being controlled.

Each control is stored in the analysis result database 140 in the data format of the control configuration information 700 shown in FIG. 7.

FIG. 8 shows an example of block configuration information according to the first embodiment. Block configuration information 800 according to the first embodiment has a block ID 801 for uniquely identifying a block. A block name 802 is a name of the block.

Each block is stored in the analysis result database 140 in the data format of the block configuration information 800 shown in FIG. 8.

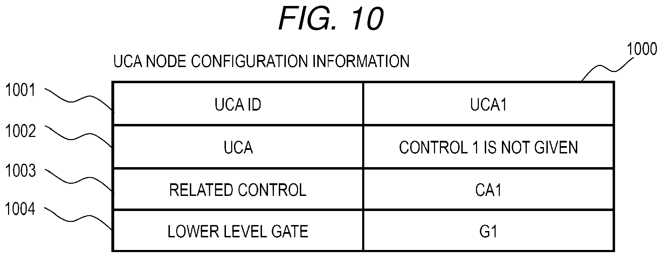

FIG. 9 shows an example of scenario tree configuration information according to the first embodiment. Scenario tree configuration information 900 according to the first embodiment has a scenario tree ID 901 for uniquely identifying a scenario tree. A target hazard 902 is a hazard or an accident caused by the scenario identified by the scenario tree ID 901. A UCA node 903 is a UCA node of a UCA ID 1001 (described below with reference to FIG. 10) serving as a vertex of the scenario tree identified by the scenario tree ID 901.

Each scenario tree is stored in the analysis result database 140 in the data format of the scenario tree configuration information 900 shown in FIG. 9.

FIG. 10 shows an example of UCA node configuration information according to the first embodiment. UCA node configuration information 1000 according to the first embodiment has a UCA ID 1001 for uniquely identifying a UCA node. A UCA 1002 is a content of the UCA identified by the UCA ID 1001. The content of the UCA is a reason that causes the hazard or an event that causes the hazard. A related control 1003 is an ID of control corresponding to the UCA identified by the UCA ID 1001. A lower level gate 1004 is a gate connected to a lower level of the UCA node identified by the UCA ID 1001.

Each UCA node is stored in the analysis result database 140 in the data format of the UCA node configuration information 1000 shown in FIG. 10.

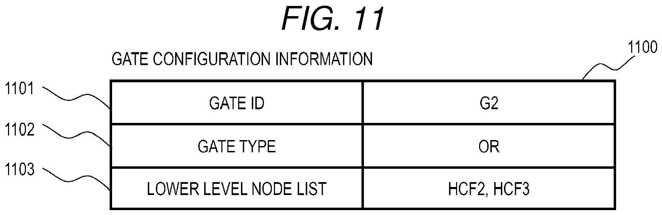

FIG. 11 shows an example of gate configuration information according to the first embodiment. Gate configuration information 1100 according to the first embodiment has a gate ID 1101 for uniquely identifying a gate. A gate type 1102 is a type of the gate identified by the gate ID 1101. The gate type includes an OR gate or an AND gate. A lower level node list 1103 is a list of HCF nodes and gates connected to the lower level of the gate identified by the gate ID 1101.

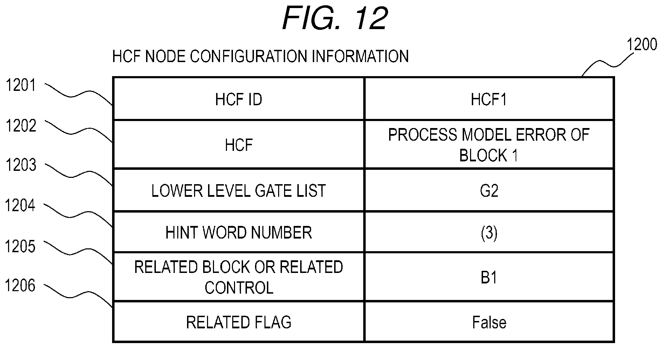

FIG. 12 shows an example of HCF node configuration information according to the first embodiment. HCF node configuration information 1200 according to the first embodiment has an HCF ID 1201 for uniquely identifying an HCF node. An HCF 1202 is a content of the HCF identified by the HCF ID 1201. The content of the HCF is a cause or an event that causes the upper level UCA or the upper level HCF, and is an HCF recalled by the user using a guide word.

A lower level gate list 1203 is a gate connected to the lower level of the HCF node identified by the HCF ID 1201. A hint word number 1204 is the number of guide words used to identify the HCF identified by the HCF ID 1201. A related block or a related control 1205 is a block ID 801 of a block or a control ID 701 of a control corresponding to the HCF identified by the HCF ID 1201. A related flag 1206 is a flag used in a recommendation processing by the scenario recommendation unit 120, which shows the presence or absence of relation with the control structure diagram input by the user.

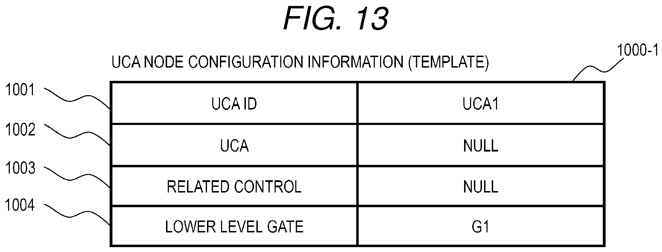

FIG. 13 shows an example of UCA node configuration information (template) according to the first embodiment. UCA node configuration information (template) 1000-1 according to the first embodiment has the same data configuration as the UCA node configuration information 1000, which, however, differs from the UCA node configuration information 1000 in that NULL is set in the UCA 1002 and the related control 1003.

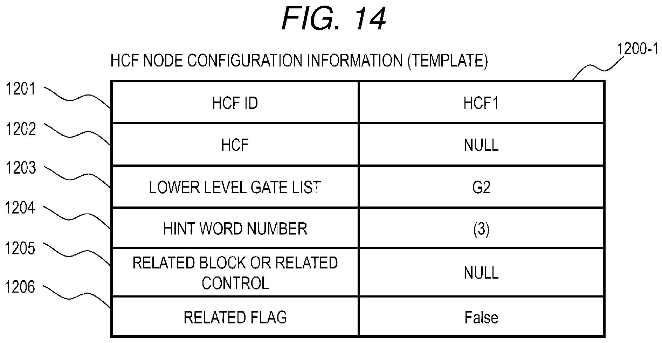

FIG. 14 shows an example of HCF node configuration information (template) according to the first embodiment. HCF node configuration information (template) 1200-1 according to the first embodiment has the same data configuration as the HCF node configuration information 1200, which, however, differs from the HCF node configuration information 1200 in that NULL is set in the HCF 1202 and the related block or related control 1205.

The UCA node configuration information (template) 1000-1 and the HCF node configuration information (template) 1200-1 are stored in the template database 150, and are information constituting a template of a scenario tree in which each node has only the guide word number as the configuration information.

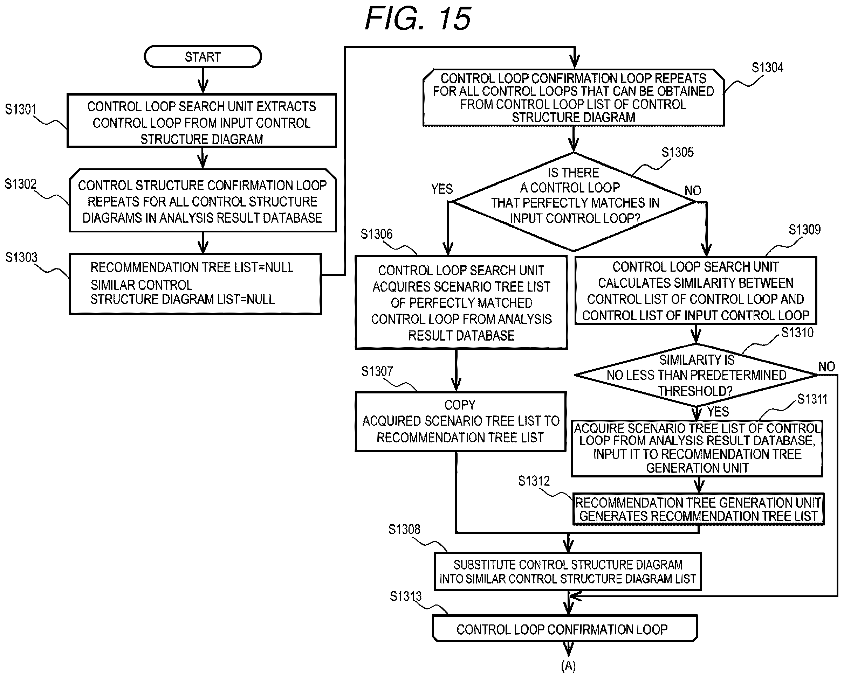

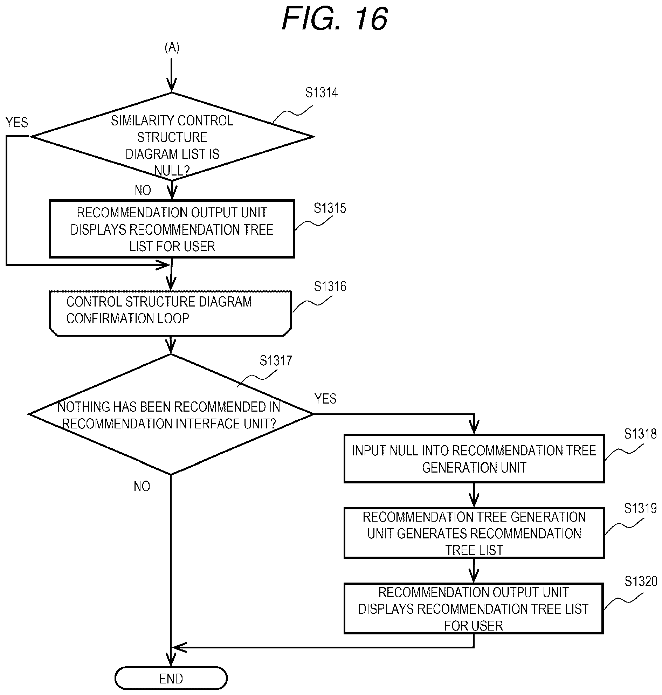

FIGS. 15 and 16 are flowcharts showing an example of processing of the scenario recommendation unit according to the first embodiment. In the processing shown in FIGS. 15 and 16, the scenario recommendation unit 120 in the first embodiment inputs a control structure diagram on the control structure diagram input screen 200 by the user and recommends a scenario tree as a hint of a scenario of a control structure diagram input by the user when the scenario recommendation button 220 is pressed.

First, the control loop search unit 121 extracts a control loop from the input control structure diagram (S1301) . Specifically, the control loop search unit 121 extracts a control loop ID from the control loop list 504 of the control structure diagram configuration information 500 (see FIG. 5) of the input control structure diagram stored in the analysis result database 140. The control loop corresponding to the extracted control loop ID is hereinafter referred to as an input control loop.

Next, the control loop search unit 121 and the recommendation tree generation unit 122 repeat the following processing (control structure confirmation loop: S1302 to S1316 (see FIG. 16)) for all the control structure diagrams stored in the analysis result database 140.

First, the scenario recommendation unit 120 substitutes NULL into the recommendation tree list, and substitutes NULL into the similar control structure diagram list (S1303). The recommendation tree list is an array variable that lists recommendation trees, and the similar control structure diagram list is an array variable that lists similar control structure diagrams. As will be described below, the recommendation tree list stores the scenario tree ID 901 of the recommendation tree generated by the recommendation tree generation unit 122, and the similar control structure diagram list stores the control structure diagram ID of the control structure diagram in step S1308.

Further, the control loop search unit 121 and the recommendation tree generation unit 122 repeat the following processing (control loop confirmation loop: S1304 to S1313) for the control loop list 504 of the control structure diagram.

First, the control loop searching unit 121 confirms whether there is a control loop that perfectly matches the input control loop (S1305). The perfect match means that all controls 702 in the control list 602 of the control loop match, and that the block 703 and the passive block 704 match each other.

In a case of perfect match (S1305: YES), the control loop search unit 121 acquires the scenario tree list 603 of the control loop configuration information 600 corresponding to the input control loop from the analysis result database 140 (S1306) . Next, the control loop searching unit 121 copies the scenario tree list 603 acquired in S1306 to the recommendation tree list (S1307) and moves the processing to S1308.

When all input control loops and the control loops do not perfectly match (S1305: NO), the control loop search unit 121 calculates the similarity between the control list 602 of the control loop and the control list 602 of the input control loop (S1309). If the similarity is equal to or greater than a predetermined threshold (S1310 : YES), the control loop search unit 121 acquires the scenario tree list 603 corresponding to the control loop from the analysis result database 140, and inputs the scenario tree list to the recommendation tree generation unit 122 (S1311). Subsequently, the recommendation tree generation unit 122 creates a recommendation tree list based on the input of S1311 (S1312) and moves the processing to S1308.

On the other hand, when the similarity is not equal to or greater than the threshold (S1305: NO), the control loop search unit 121 moves the processing to S1313.

In S1308, the control loop search unit 121 substitutes the control structure diagram ID of the control structure diagram to be processed in the execution of the control structure confirmation loop this time into the similar control structure diagram list (S1308). Subsequently, the control loop search unit 121 and the recommendation tree generation unit 122 execute a control loop confirmation loop for the next control loop (S1313). When control loop confirmation loop: S1304 to S1313 for all input control loops ends, the control loop searching unit 121 moves the processing to S1314 in FIG. 16.

Subsequently, when confirmation of all control loops is completed in S1313, when the similar control structure diagram list is NULL (S1314: YES), the control loop search unit 121 confirms the next control structure diagram (S1316) . When the similar control structure diagram list is not NULL (S1314 : NO), the recommendation output unit 123 displays a recommendation tree list on the recommendation interface unit 112 for the user (S1315).

Subsequently, in S1316, when confirmation of all control structure diagrams is completed, when the recommendation tree is not displayed in the recommendation interface unit 112 (S1317: YES), the control loop search unit 121 inputs NULL into the recommendation tree generation unit 122 (S1318). In response to this, when there is no recommendable scenario tree in the analysis result database 140, the recommendation tree generation unit 122 generates a recommendation tree list from the UCA node configuration information (template) 1000-1 and the HCF node configuration information (template) 1200-1 stored in the template database 150 (S1319) . After that, the recommendation output unit 123 displays the recommendation tree list generated in S1319 on the recommendation interface unit 112 (S1320).

In S1316, when the confirmation of all control structure diagrams is completed, when the recommendation tree is displayed in the recommendation interface unit 112 (S1317: NO) or when S1320 ends, the processing of the scenario recommendation unit ends.

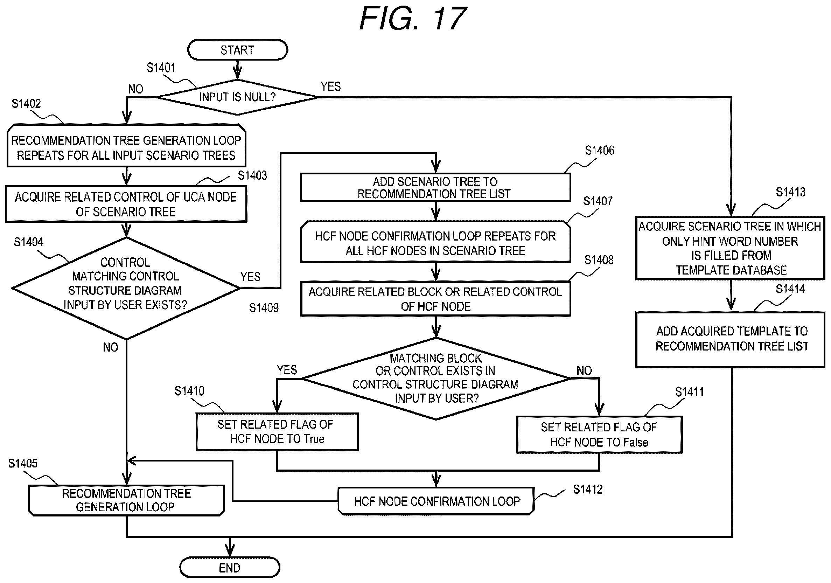

FIG. 17 is a flowchart showing an example of recommendation tree generation processing according to the first embodiment. The recommendation tree generation processing according to the first embodiment is a subroutine showing a detailed example of the processing of S1312 in FIG. 15 and S1319 in FIG. 16.

First, in S1401, when the input is NULL, that is, when a recommendable scenario tree does not exist in the analysis result database 140 (S1401: YES), the recommendation tree generation unit 122 acquires, from the template database 150, a template of a scenario tree which is configured with the UCA node configuration information (template) 1000-1 and the HCF node configuration information (template) 1200-1 and in which only the hint word number 1204 is filled (S1413) . Subsequently, the recommendation tree generation unit 122 adds the scenario tree ID 901 to the scenario tree acquired in S1413 and adds the scenario tree to the recommendation tree list (S1414) , and ends the recommendation tree generation processing.

On the other hand, when the input is not NULL (S1401: NO), the recommendation tree generation unit 122 repeats the following processing (recommendation tree generation loop: S1402 to S1412) for all the input scenario trees.

First, the recommendation tree generation unit 122 acquires the related control 1003 of the UCA node 1000 of the input scenario tree (S1403). In the present embodiment, it is assumed that the related control 1003 of the UCA node 902, which is the vertex of the recommendation tree, has to exist in the control structure diagram input by the user. When the control matching the related control 1003 acquired in S1403 exists in the control structure diagram input by the user (S1404: YES), the recommendation tree generation unit 122 adds the scenario tree to the recommendation tree list (S1406). When the control matching the related control 1003 acquired in S1403 does not exist in the control structure diagram input by the user (S1404: NO), and the processing of S1402 to S1405 has been processed for all input scenario trees to be processed, the recommendation tree generation unit 122 ends the recommendation tree generation processing.

Subsequent to S1406, the recommendation tree generation unit 122 repeats the following processing (HCF node confirmation loop: S1407 to S1412) for all the HCF nodes in the scenario tree added to the recommendation tree list in S1406.

First, the recommendation tree generation unit 122 acquires the related block or the related control 1205 of the HCF node to be processed (S1408) . When a matching control or block exists in the control structure diagram input by the user (S1409: YES), the recommendation tree generation unit 122 sets the related flag 1206 of the HCF node to True (S1410) . On the other hand, when not (S1409: NO), the recommendation tree generation unit 122 sets the related flag 1206 of the HCF node to False (S1411). When the processing of S1407 to S1412 has been processed for all HCF nodes to be processed, the recommendation tree generation unit 122 moves the processing to S1405.

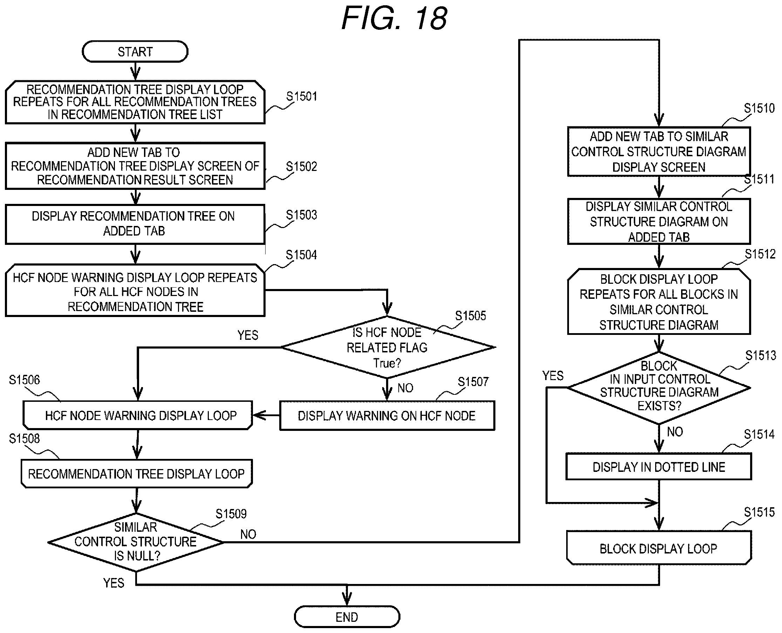

FIG. 18 is a flowchart of an example of recommendation tree display processing according to the first embodiment. The recommendation tree display processing according to the first embodiment is a subroutine showing a detailed example of processing in which the recommendation output unit 123 in S1315 and S1320 in FIG. 16 displays a recommendation tree.

First, the recommendation output unit 123 repeats the following processing (recommendation tree display loop: S1501 to S1508) for all the recommendation trees in the recommendation tree list.

First, the recommendation output unit 123 adds a new tab (new tab of tabs illustrated by "scenario 1" "scenario 2" ... in FIG. 3) to the recommendation tree display screen 350 of the recommendation result screen 300 (S1502). Subsequently, the recommendation output unit 123 displays a recommendation tree on the tab added in S1502 (S1503).

Next, the recommendation output unit 123 repeats the following processing (HCF node warning display loop: S1504 to S1507) for all HCF nodes in the recommendation tree displayed on the new tab of the recommendation tree display screen 350 in S1503.

First, the recommendation output unit 123 confirms whether the related flag 1206 of the HCF node is True (S1505) . In the case of False (S1505: NO), the recommendation output unit 123 displays a warning (see the HCF node 353 in FIG. 3) to the corresponding HCF node (S1507) . When the related flag 1206 of the HCF node is True (S1505: YES) or after S1507 ends, when the processing of S1501 to S1508 for all the recommendation trees in the recommendation tree list ends, the processing moves to S1509.

In S1509 to S1512, the recommendation output unit 123 displays a similar control structure diagram. When the similar control structure diagram is NULL (S1509: YES), the recommendation tree display processing ends. When it is not NULL (S1509: NO), the recommendation output unit 123 adds a new tab (new tab of tabs illustrated by "FIG. 1", "FIG. 2" ... in FIG. 3) to the similar control structure diagram display screen 330 (S1510).

Subsequently, the recommendation output unit 123 displays the similar control structure diagram stored in the similar control structure diagram list on the new tab of the similar control structure diagram display screen 330 added in S1510 (S1511).

Subsequently, the recommendation output unit 123 repeats the following processing (block display loop: S1512 to S1515) for all blocks in the similar control structure diagram. When a block does not exist in the control structure diagram input by the user (S1513: YES), the recommendation output unit 123 changes the block to a dotted line display (S1514). When a block exists in the control structure diagram input by the user (S1513: YES), the recommendation output unit 123 moves the processing to S1515.

When all blocks in the similar control structure diagram to be processed in S1515 have been processed from S1512 to S1515, the recommendation tree generation unit 122 ends the recommendation tree display processing.

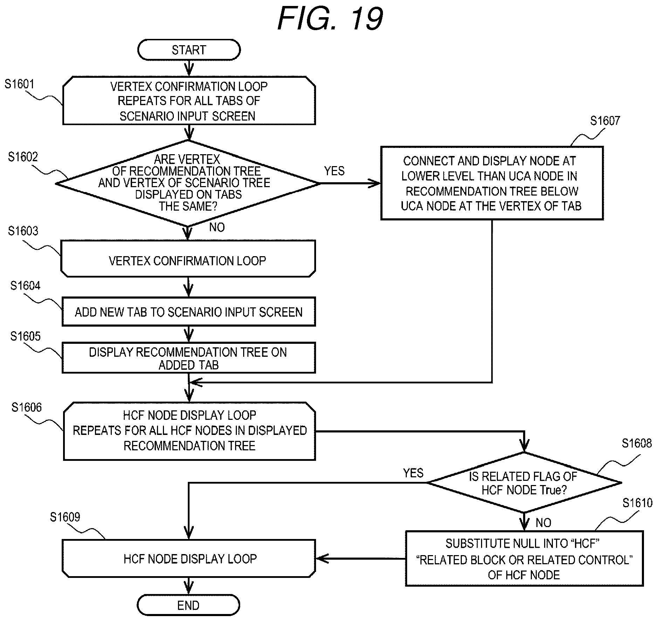

FIG. 19 is a flowchart showing an example of a scenario capture processing according to the first embodiment. In the processing of capturing the scenario according to the first embodiment, the scenario capture unit 130 captures the recommendation tree displayed on the recommendation tree display screen 350 as a scenario when the user presses the capture button 340 (FIG. 3).

The following processing (vertex confirmation loop: S1601 to S1603) is repeated for all tabs (all tabs illustrated by "scenario 1" ... in FIG. 4) on the scenario input screen 400.

First, the scenario capture unit 130 confirms whether the UCA node at the vertex of the scenario tree displayed on the tab to be processed of the scenario input screen 400 is the same as the UCA node at the vertex of the recommendation tree (S1602). When the UCA nodes at these vertices are the same (S1602 : YES), the scenario capture unit 130 adds the lower level gate 1004 of the UCA node of the recommendation tree to the lower level node list 1103 of the lower level gate 1004 of the UCA node at the vertex of the scenario tree displayed in the tab to be processed and displays it (S1607) . By grouping scenario trees of the same UCA node into one recommendation tree by the processing of S1607, the risk analysis can be more efficient. After the display of S1607, the vertex confirmation loop (S1601) ends. When the vertices are not the same (S1602: NO), the vertex confirmation loop is continued (S1603).

When the scenario tree having the same vertex does not exist after the vertex confirmation loop of S1601 to S1603, the scenario capture unit 130 adds a new tab to the scenario input screen 400 (S1604) . Subsequently, the scenario capture unit 130 displays a recommendation tree on the new tab added in S1604 (S1605).

After displaying the recommendation tree on the new tab of the scenario input screen 400, the scenario capture unit 130 repeats the following processing (HCF node display loop: S1606 to S1610) for all HCF nodes in the displayed recommendation tree.

First, the scenario capture unit 130 confirms whether the related flag 1206 of the HCF node to be processed is True (S1608) . When it is not Ture (S1608: NO), the scenario capture unit 130 first substitutes NULL into "HCF 1202" "related block or related control 1205" of the HCF node to be processed, and updates the display (S1610). When S1610 ends and the processing of S1606 to S1609 have been processed for all HCF nodes to be processed in S1609, the scenario capture unit 130 ends the scenario capture processing.

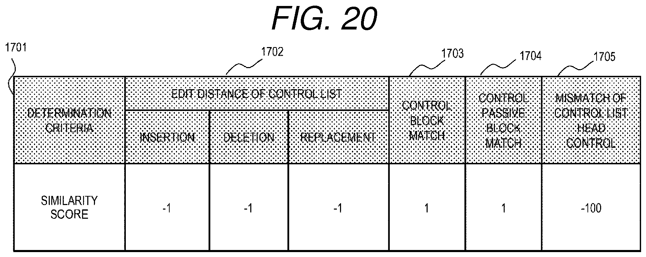

FIG. 20 shows an example of a similarity calculation method according to the first embodiment. The similarity calculation method according to the first embodiment is one method of calculating the similarity of the control loop in S1309 of FIG. 15, which, however, is not limited thereto. The similarity is higher as a total value of a similarity score 1701 is higher.

One of the determination criteria of the similarity is an edit distance 1702 of the control list 602 shown in FIG. 20. The edit distance 1702 shows an example in which the similarity score is added with -1 each time processing such as insertion, deletion, or replacement on a control or a block is performed once as necessary until the input control loop matches the control loop in the control loop list of the control structure diagram.

Further, FIG. 20 shows an example in which, for each control in the control list 602 of the control loop, it is regarded as a control block match 1703 and a similarity score is added with +1 when the control 702 matches and the block 703 of control matches. Further, FIG. 20 shows an example in which, for each control in the control list 602 of the control loop, it is regarded as a control passive block match 1704 and a similarity score is added with +1 when the control 702 matches and the passive block 704 of control matches. Further, FIG. 20 shows an example in which, a mismatch of control list head control 1705 is set and a similarity score is added with -100 when a head control of the control list 602 does not match.

Note that, the mismatch of control list head control 1705 may be omitted. In this case, when the similarity is calculated (see S1309 in FIG. 15), the UCA node of the control list of the control loop and the UCA node of the control list of the input control loop do not match, which is excluded from the target of similarity calculation.

In the first embodiment, a control structure diagram representing a risk analysis target such as a system by control and block, and a scenario in which each node is represented as a tree structure having a correspondence relationship with a control structure diagram and a guide word are accumulated in a database, a control structure diagram having a subset similar to a control subset of a control structure diagram of an input system is searched from a database, and a tree structure of a hazard scenario having a correspondence relationship with the control structure diagram obtained by the search is recommended. Therefore, according to the first embodiment, since the hazard scenario corresponding to the control structure diagram of the input system is displayed based on the accumulated past hazard scenario, analysis time of the risk analysis of a system represented by a plurality of blocks and controls can be shortened, and the burden on the executor can be reduced. Furthermore, since the risk inherent in the system is visually displayed on the GUI by using the past risk analysis results, it is possible to prevent the executor that performs the risk analysis from neglecting the risk.

### [Second Embodiment]

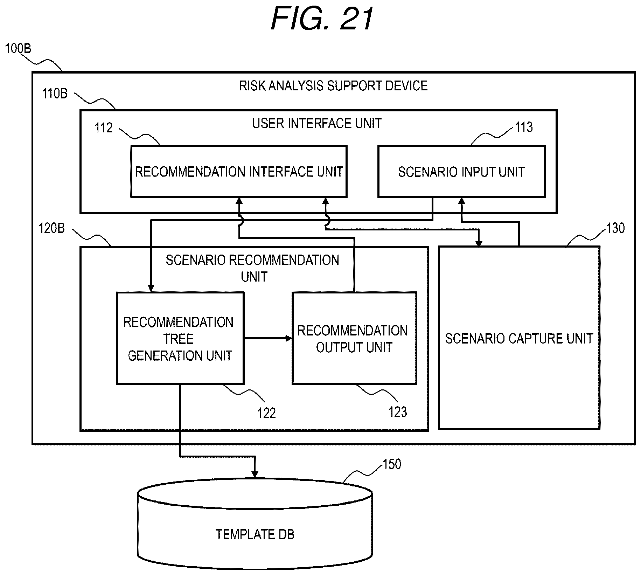

In a second embodiment of the invention, when a user adds a new HCF node to a scenario tree on the scenario input screen 400, recommendation of a lower level node is executed. Hereinafter, in the present embodiment, the same reference numerals are given to the same components as those in the first embodiment, and descriptions thereof will be omitted. Further, in FIG. 21, illustration of the configuration is omitted as appropriate.

FIG. 21 is a block diagram showing an example of a configuration of a risk analysis support device according to a second embodiment. In a risk analysis support device 100B according to the second embodiment, when a new HCF node is added by the scenario input unit 113, the recommendation tree generation unit 122 creates a recommendation tree below the new HCF node, and the recommendation output unit 123 of a scenario recommendation unit 120B displays the recommendation tree on the recommendation interface unit 112 of a user interface unit 110B. When the capture button 340 (see FIG. 3) is pressed, the scenario capture unit 130 adds the recommendation tree displayed in the recommendation interface unit 112 below the new HCF node of the scenario input unit 113 and displays it.

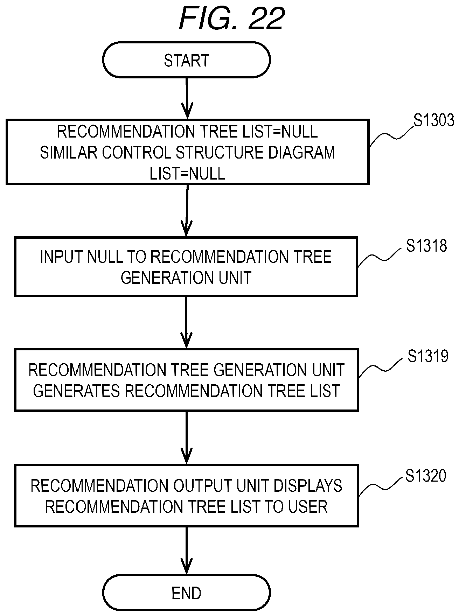

FIG. 22 is a flowchart showing an example of processing of a scenario recommendation unit according to the second embodiment. The scenario recommendation unit 120 executes processing of recommending a scenario tree corresponding to a new HCF node input by the user when the user adds the new HCF node on the scenario input screen 400.

First, the scenario recommendation unit 120 substitutes NULL into a recommendation tree list, and substitutes NULL into a similar control structure diagram list (S1303). Subsequently, the scenario recommendation unit 120 inputs NULL to the recommendation tree generation unit 122 (S1318). In response to S1318, the recommendation tree generation processing of FIG. 17 is executed to generate a recommendation tree. Subsequently, the recommendation tree generation unit 122 generates a recommendation tree list (S1319) . When NULL is input, the recommendation tree generation unit 122 acquires a scenario tree configured only with the hint word number 1204 from the template database 150 and substitutes it into the recommendation tree list (see processing sequence of S1401 to S1413 to S1414 in FIG. 17). Finally, the recommendation output unit 123 displays the recommendation tree list generated in S1319 on the recommendation interface unit 112 (S1320).

According to the above second embodiment, when it is considered that an appropriate failure cause corresponding to the hazard 412 of the scenario input screen 400 is not displayed in the lowest level HCF node of the recommendation tree in the process of risk analysis, by newly adding an empty HCF node having only the hint word as configuration information by the executor that performs risk analysis, an appropriate node or tree structure connected below the added HCF node is acquired from the template database 150 and added to the recommendation tree. By repeating such processing, an appropriate failure cause in the scenario input screen 400 is displayed on the lowest level HCF node of the recommendation tree, and it is possible to efficiently support identification of the failure cause of the target hazard by the executor that performs risk analysis.

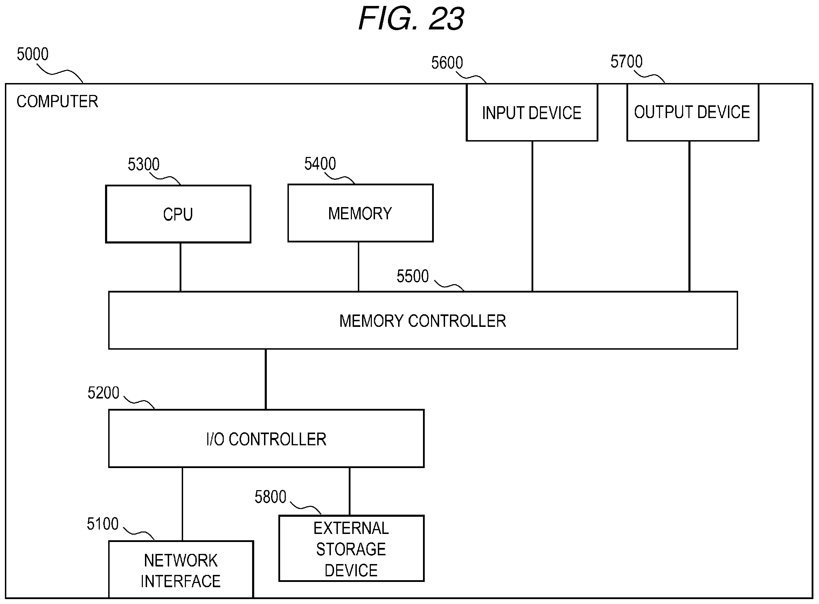

FIG. 23 shows an example of a computer that realizes the risk analysis support device. In the computer 5000 for realizing the risk analysis support devices 100 and 100B in the first and second embodiments, a memory 5400 such as a Central Processing Unit (CPU) 5300 and a Random Access Memory (RAM), an input device 5600 (for example, a keyboard, a mouse, and a touch panel), and an output device 5700 (for example, a video graphics card connected to an external display monitor) are interconnected through a memory controller 5500. In the computer 5000, a program for realizing the risk analysis support devices 100 and 100B is read from an external storage device 5800 such as an SSD or HDD via an Input/Output (I/O) controller 5200, and thus the risk analysis support devices 100 and 100B are realized by being executed by the cooperation of the CPU 5300 and the memory 5400. Alternatively, a program for realizing the risk analysis support devices 100 and 100B may be acquired from an external computer through communication via a network interface 5100.

Note that, the invention is not limited to the embodiments described above, and includes various modifications. For example, the above-described embodiments are described in detail to explain the invention in an easy-to-understand manner, and are not necessarily limited to those having all the configurations described. Further, a part of the configuration in one embodiment can be replaced with the configuration in another embodiment, and the configuration in another embodiment can be added to the configuration in one embodiment. In addition, with respect to a part of the configuration in each embodiment, it is possible to add, delete, and replace other configurations.

## Claims

1. A risk analysis support device, comprising:
an input unit (111) which is connected with a database (140) and receives an input of a risk analysis target represented in a form of a control structure diagram (213), the database (140) accumulating: (i) the control structure diagram (213) representing the risk analysis target by a block (211) and a control (212) showing a relationship between a block executing control and a passive block (704) controlled by the executing block, and (ii) a hazard scenario which corresponds to the control structure diagram (213) and is represented by a tree structure in which each node has a correspondence relationship with the block (211) or the control (212) of the control structure diagram (213);
a search unit (121) which searches in the database (140) for a similar control structure diagram (213) including a subset of controls that matches or is similar to a subset of controls extracted from the control structure diagram (213) whose input is received by the input unit (111), and acquires from the database (140) a hazard scenario including a node having a correspondence relationship with a subset of controls included in the similar control structure diagram (213); and
an output unit (123) which outputs the hazard scenario acquired by the search unit (121) in a tree structure.

2. The risk analysis support device according to claim 1, wherein
when outputting the hazard scenario in a tree structure, the output unit (123) identifiably outputs a node corresponding to a block or a control that exists in a subset of controls of the similar control structure diagram (213) but does not exist in the control structure diagram (213) whose input is received by the input unit (111).

3. The risk analysis support device according to claim 1, wherein
the search unit (121) additionally searches in the database (140) for another similar control structure diagram (213) including a subset of controls that matches or is similar to a subset of controls extracted from the control structure diagram (213) whose input is received by the input unit (111), and acquires from the database (140) a hazard scenario including a node having a correspondence relationship with a subset of controls included in the other similar control structure diagram (213).

4. The risk analysis support device according to claim 1, further comprising:
a capture unit (130) which captures the hazard scenario output in a tree structure by the output unit (123) as a hazard scenario corresponding to the control structure diagram (213) whose input is received by the input unit (111), and accumulates the hazard scenario in the database (140).

5. The risk analysis support device according to claim 4, wherein
when capturing a plurality of hazard scenarios output in a tree structure by the output unit (123) as hazard scenarios corresponding to the control structure diagram (213) whose input is received by the input unit (111) and accumulating the plurality of hazard scenarios in the database (140), the capture unit (130) connects hazard scenarios having the same vertex among the plurality of hazard scenarios to a tree structure having the same vertex.

6. The risk analysis support device according to claim 4, wherein
the capture unit (130) displays the hazard scenario output in a tree structure by the output unit (123) on a display unit in an editable manner and receives edition, and captures the edited hazard scenario as a hazard scenario corresponding to the control structure diagram (213) whose input is received by the input unit (111) and accumulates the hazard scenario in the database (140).

7. The risk analysis support device according to claim 4, wherein
when a block or a control having a correspondence relationship with a node of the captured hazard scenario does not exist in the control structure diagram (213) whose input is received by the input unit (111), the capture unit accumulates the hazard scenario in the database (140) in which the node serves as a node having guide word information and tree structure information.

8. The risk analysis support device according to claim 1, further comprising:
a generation unit (122) which is connected with a template database (150) which accumulates a template scenario in which each node has guide word information and tree structure information, and generates a hazard scenario based on a template accumulated in the template database when the similar control structure diagram (213) including a subset of controls that matches or is similar to a subset of controls extracted from the control structure diagram (213) whose input is received by the input unit (111) does not exist in the database (140), wherein
the output unit (123) outputs the hazard scenario generated by the generation unit (122) in a tree structure.

9. The risk analysis support device according to claim 1, wherein
the search unit (121) determines a match or similarity between a subset of controls extracted from the control structure diagram (213) whose input is received by the input unit (111) and a subset of controls included in the similar control structure diagram (213) based on a similarity based on an edit distance of a block or control in the control structure diagram (213) and the similar control structure diagram (213).

10. The risk analysis support device according to claim 9, wherein
the search unit (121) adds a point to the similarity when the executing block matches.

11. The risk analysis support device according to claim 10, wherein
the search unit (121) adds a point to the similarity when the passive block (704) matches.

12. A risk analysis support method comprising steps executed by a risk analysis support device (100), wherein
the risk analysis support device (100)
is connected with a database (140) and receives an input of a risk analysis target represented in a form of a control structure diagram (213), the database (140) accumulating (i) the control structure diagram (213) representing the risk analysis target by a block (211) and a control (212) showing a relationship between a block executing control and a passive block (704) controlled by the executing block, and (ii) a hazard scenario which corresponds to the control structure diagram (213) and is represented by a tree structure in which each node has a correspondence relationship with the block (211) or the control (212) of the control structure diagram (213),
searches in the database for a similar control structure diagram (213) including a subset of controls that matches or is similar to a subset of controls extracted from the control structure diagram (213) whose input is received by the input unit (111), and acquires from the database (140) a hazard scenario including a node having a correspondence relationship with a subset of controls included in the similar control structure diagram (213), and
outputs the acquired hazard scenario in a tree structure.

13. A risk analysis support program that causes a computer to function as a risk analysis support device, wherein
the computer functions as
an input unit (111) which is connected with a database (140) and receives an input of a risk analysis target represented in a form of a control structure diagram (213), the database accumulating: (i) the control structure diagram (213) representing the risk analysis target by a block (211) and a control (212) showing a relationship between a block executing control and a passive block (704) controlled by the executing block, and (ii) a hazard scenario which corresponds to the control structure diagram (213) and is represented by a tree structure in which each node has a correspondence relationship with the block (211) or the control (212) of the control structure diagram (213),
a search unit (121) which searches in the database for a similar control structure diagram (213) including a subset of controls that matches or is similar to a subset of controls extracted from the control structure diagram (213) whose input is received by the input unit (111), and acquires from the database a hazard scenario including a node having a correspondence relationship with a subset of controls included in the similar control structure diagram (213), and
an output unit (123) which outputs the hazard scenario acquired by the search unit (121) in a tree structure.

## Patentansprüche

1. Vorrichtung zur Unterstützung einer Risikoanalyse, die Folgendes umfasst:
eine Eingabeeinheit (111), die mit einer Datenbank (140) verbunden ist und eine Eingabe eines Risikoanalyseziels empfängt, das in Form eines Steuerstrukturdiagramms (213) dargestellt ist, wobei die Datenbank (140) Folgendes sammelt: (i) das Steuerstrukturdiagramm (213), das das Risikoanalyseziel durch einen Block (211) und eine Steuerung (212) darstellt, die eine Beziehung zwischen einem Block, der eine Steuerung ausführt, und einem passiven Block (704), der durch den ausführenden Block gesteuert wird, zeigt, und (ii) ein Gefahrenszenario, das dem Steuerstrukturdiagramm (213) entspricht und durch eine Baumstruktur dargestellt ist, in der jeder Knoten eine Entsprechungsbeziehung mit dem Block (211) oder der Steuerung (212) des Steuerstrukturdiagramms (213) aufweist;
eine Sucheinheit (121), die in der Datenbank (140) nach einem ähnlichen Steuerstrukturdiagramm (213) sucht, das eine Teilmenge von Steuerungen enthält, die mit einer Teilmenge von Steuerungen, die aus dem Steuerstrukturdiagramm (213) extrahiert worden sind, übereinstimmt oder dieser ähnlich ist, dessen Eingabe von der Eingabeeinheit (111) empfangen worden ist, und aus der Datenbank (140) ein Gefahrenszenario erfasst, das einen Knoten enthält, der eine Entsprechungsbeziehung mit einer Teilmenge von Steuerungen, die in dem ähnlichen Steuerstrukturdiagramm (213) enthalten sind, aufweist; und
eine Ausgabeeinheit (123), die das Gefahrenszenario, das von der Sucheinheit (121) erfasst worden ist, in einer Baumstruktur ausgibt.

2. Vorrichtung zur Unterstützung einer Risikoanalyse nach Anspruch 1, wobei
die Ausgabeeinheit (123) dann, wenn sie das Gefahrenszenario in einer Baumstruktur ausgibt, einen Knoten identifizierbar ausgibt, der einem Block oder einer Steuerung entspricht, die in einer Teilmenge von Steuerungen des ähnlichen Steuerstrukturdiagramms (213) existiert, aber nicht in dem Steuerstrukturdiagramm (213) existiert, dessen Eingabe von der Eingabeeinheit (111) empfangen worden ist.

3. Vorrichtung zur Unterstützung einer Risikoanalyse nach Anspruch 1, wobei
die Sucheinheit (121) in der Datenbank zusätzlich nach einem anderen ähnlichen Steuerstrukturdiagramm (213) sucht, das eine Teilmenge von Steuerungen enthält, die mit einer Teilmenge von Steuerungen, die aus dem Steuerstrukturdiagramm (213) extrahiert worden sind, übereinstimmt oder dieser ähnlich ist, dessen Eingabe von der Eingabeeinheit (111) empfangen worden ist, und aus der Datenbank (140) ein Gefahrenszenario erfasst, das einen Knoten enthält, der eine Entsprechungsbeziehung mit einer Teilmenge von Steuerungen, die in dem anderen ähnlichen Steuerstrukturdiagramm (213) enthalten sind, aufweist.

4. Vorrichtung zur Unterstützung einer Risikoanalyse nach Anspruch 1, die ferner Folgendes umfasst:
eine Aufnahmeeinheit (130), die das Gefahrenszenario, das von der Ausgabeeinheit (123) in einer Baumstruktur ausgegeben worden ist, als ein Gefahrenszenario aufnimmt, das dem Steuerstrukturdiagramm (213) entspricht, dessen Eingabe von der Eingabeeinheit (111) empfangen worden ist, und das Gefahrenszenario in der Datenbank (140) sammelt.

5. Vorrichtung zur Unterstützung einer Risikoanalyse nach Anspruch 4, wobei
die Aufnahmeeinheit (130) dann, wenn sie mehrere Gefahrenszenarien, die von der Ausgabeeinheit (123) in einer Baumstruktur ausgegeben worden sind, als Gefahrenszenarien, die dem Steuerstrukturdiagramm (213) entsprechen, dessen Eingabe von der Eingabeeinheit (111) empfangen worden ist, aufnimmt und die mehreren Gefahrenszenarien in der Datenbank (140) sammelt, Gefahrenszenarien, die denselben Scheitelpunkt unter den mehreren Gefahrenszenarien aufweisen, zu einer Baumstruktur verbindet, die denselben Scheitelpunkt aufweist.

6. Vorrichtung zur Unterstützung einer Risikoanalyse nach Anspruch 4, wobei
die Aufnahmeeinheit (130) das Gefahrenszenario, das von der Ausgabeeinheit (123) in einer Baumstruktur ausgegeben wird, auf einer Anzeigeeinheit editierbar anzeigt und Editierung empfängt, und das editierte Gefahrenszenario als ein Gefahrenszenario aufnimmt, das dem Steuerstrukturdiagramm (213) entspricht, dessen Eingabe von der Eingabeeinheit (111) empfangen worden ist, und das Gefahrenszenario in der Datenbank (140) sammelt.

7. Vorrichtung zur Unterstützung einer Risikoanalyse nach Anspruch 4, wobei
die Aufnahmeeinheit dann, wenn ein Block oder eine Steuerung, die eine Entsprechungsbeziehung mit einem Knoten des aufgenommenen Gefahrenszenario aufweist, in dem Steuerstrukturdiagramm (213) nicht existiert, dessen Eingabe von der Eingabeeinheit (111) empfangen worden ist, das Gefahrenszenario in der Datenbank (140) sammelt, in der der Knoten als ein Knoten dient, der Leitwortinformationen und Baumstrukturinformationen aufweist.

8. Vorrichtung zur Unterstützung einer Risikoanalyse nach Anspruch 1, die ferner Folgendes umfasst:
eine Erzeugungseinheit (122), die mit einer Vorlagendatenbank (150) verbunden ist, die ein Vorlagenszenario sammelt, in dem jeder Knoten Leitwortinformationen und Baumstrukturinformationen aufweist, und basierend auf einer Vorlage, die in der Vorlagendatenbank gesammelt ist, ein Gefahrenszenario erzeugt, wenn das ähnliche Steuerstrukturdiagramm (213), das eine Teilmenge von Steuerungen enthält, die mit einer Teilmenge von Steuerungen, die aus dem Steuerstrukturdiagramm (213) extrahiert worden ist, dessen Eingabe von der Eingabeeinheit (111) empfangen worden ist, übereinstimmt oder dieser ähnlich ist, in der Datenbank (140) nicht existiert, wobei
die Ausgabeeinheit (123) das Gefahrenszenario, das von der Erzeugungseinheit (122) erzeugt worden ist, in einer Baumstruktur ausgibt.

9. Vorrichtung zur Unterstützung einer Risikoanalyse nach Anspruch 1, wobei
die Sucheinheit (121) eine Übereinstimmung oder Ähnlichkeit zwischen einer Teilmenge der Steuerungen, die aus dem Steuerstrukturdiagramm (213) extrahiert worden ist, dessen Eingabe von der Eingabeeinheit (111) empfangen worden ist, und einer Teilmenge der Steuerungen, die in dem ähnlichen Steuerstrukturdiagramm (213) enthalten ist, basierend auf einer Ähnlichkeit, die auf einem Editierabstand eines Blocks oder einer Steuerung in dem Steuerstrukturdiagramm (213) und dem ähnlichen Steuerstrukturdiagramm (213) basiert.

10. Vorrichtung zur Unterstützung einer Risikoanalyse nach Anspruch 9, wobei
die Sucheinheit (121) dann, wenn der ausführende Block übereinstimmt, der Ähnlichkeit einen Punkt hinzufügt.

11. Vorrichtung zur Unterstützung einer Risikoanalyse nach Anspruch 10, wobei
die Sucheinheit (121) dann, wenn der passive Block (704) übereinstimmt, der Ähnlichkeit einen Punkt hinzufügt.

12. Verfahren zur Unterstützung einer Risikoanalyse, das Schritte umfasst, die durch eine Vorrichtung (100) zur Unterstützung einer Risikoanalyse ausgeführt werden, wobei
die Vorrichtung (100) zur Unterstützung der Risikoanalyse
mit einer Datenbank (140) verbunden ist und eine Eingabe eines Risikoanalyseziels empfängt, das in Form eines Steuerstrukturdiagramms (213) dargestellt ist, wobei die Datenbank (140) Folgendes sammelt: (i) das Steuerstrukturdiagramm (213), das das Risikoanalyseziel durch einen Block (211) und eine Steuerung (212) darstellt, die eine Beziehung zwischen einem Block, der eine Steuerung ausführt, und einem passiven Block (704), der durch den ausführenden Block gesteuert wird, zeigt, und (ii) ein Gefahrenszenario, das dem Steuerstrukturdiagramm (213) entspricht und durch eine Baumstruktur dargestellt ist, in der jeder Knoten eine Entsprechungsbeziehung mit dem Block (211) oder der Steuerung (212) des Steuerstrukturdiagramms (213) aufweist;
in der Datenbank (140) nach einem ähnlichen Steuerstrukturdiagramm (213) sucht, das eine Teilmenge von Steuerungen enthält, die mit einer Teilmenge von Steuerungen, die aus dem Steuerstrukturdiagramm (213) extrahiert worden sind, übereinstimmt oder dieser ähnlich ist, dessen Eingabe von der Eingabeeinheit (111) empfangen worden ist, und aus der Datenbank (140) ein Gefahrenszenario erfasst, das einen Knoten enthält, der eine Entsprechungsbeziehung mit einer Teilmenge von Steuerungen, die in dem ähnlichen Steuerstrukturdiagramm (213) enthalten sind, aufweist; und
das Gefahrenszenario in einer Baumstruktur ausgibt.

13. Programm zur Unterstützung einer Risikoanalyse, das einen Computer veranlasst, als eine Vorrichtung zur Unterstützung einer Risikoanalyse zu funktionieren, wobei
der Computer funktioniert als
eine Eingabeeinheit (111), die mit einer Datenbank (140) verbunden ist und eine Eingabe eines Risikoanalyseziels empfängt, das in Form eines Steuerstrukturdiagramms (213) dargestellt ist, wobei die Datenbank (140) Folgendes sammelt: (i) das Steuerstrukturdiagramm (213), das das Risikoanalyseziel durch einen Block (211) und eine Steuerung (212) darstellt, die eine Beziehung zwischen einem Block, der eine Steuerung ausführt, und einem passiven Block (704), der durch den ausführenden Block gesteuert wird, zeigt, und (ii) ein Gefahrenszenario, das dem Steuerstrukturdiagramm (213) entspricht und durch eine Baumstruktur dargestellt ist, in der jeder Knoten eine Entsprechungsbeziehung mit dem Block (211) oder der Steuerung (212) des Steuerstrukturdiagramms (213) aufweist,
eine Sucheinheit (121), die in der Datenbank (140) nach einem ähnlichen Steuerstrukturdiagramm (213) sucht, das eine Teilmenge von Steuerungen enthält, die mit einer Teilmenge von Steuerungen, die aus dem Steuerstrukturdiagramm (213) extrahiert worden sind, übereinstimmt oder dieser ähnlich ist, dessen Eingabe von der Eingabeeinheit (111) empfangen worden ist, und aus der Datenbank ein Gefahrenszenario erfasst, das einen Knoten enthält, der eine Entsprechungsbeziehung mit einer Teilmenge von Steuerungen, die in dem ähnlichen Steuerstrukturdiagramm (213) enthalten sind, aufweist; und
eine Ausgabeeinheit (123), die das Gefahrenszenario, das von der Sucheinheit (121) erfasst worden ist, in einer Baumstruktur ausgibt.

## Revendications

1. Dispositif d'assistance à l'analyse de risques, comprenant :
une unité d'entrée (111) qui est connectée à une base de données (140) et reçoit une entrée d'une cible d'analyse de risques représentée sous la forme d'un diagramme de structure de commande (213), la base de données (140) accumulant :
(i) le diagramme de structure de commande (213) représentant la cible d'analyse de risques par un bloc (211) et une commande (212) montrant une relation entre un bloc exécutant la commande et un bloc passif (704) commandé par le bloc exécutant, et
(ii) un scénario de risque qui correspond au diagramme de structure de commande (213) et est représenté par une structure arborescente dans laquelle chaque nœud a une relation de correspondance avec le bloc (211) ou la commande (212) du diagramme de structure de commande (213) ;
une unité de recherche (121) qui recherche dans la base de données (140) un diagramme de structure de commande similaire (213) incluant un sous-ensemble de commandes qui correspond ou est similaire à un sous-ensemble de commandes extrait du diagramme de structure de commande (213) dont l'entrée est reçue par l'unité d'entrée (111), et acquiert à partir de la base de données (140) un scénario de risque incluant un nœud ayant une relation de correspondance avec un sous-ensemble de commandes inclus dans le diagramme de structure de commande similaire (213) ; et
une unité de sortie (123) qui sort le scénario de risque acquis par l'unité de recherche (121) dans une structure arborescente.

2. Dispositif d'assistance à l'analyse de risques selon la revendication 1, dans lequel,
lorsqu'elle sort le scénario de risque dans une structure arborescente, l'unité de sortie (123) sort de manière identifiable un nœud correspondant à un bloc ou une commande qui existe dans un sous-ensemble de commandes du diagramme de structure de commande similaire (213) mais n'existe pas dans le diagramme de structure de commande (213) dont l'entrée est reçue par l'unité d'entrée (111).

3. Dispositif d'assistance à l'analyse de risques selon la revendication 1, dans lequel
l'unité de recherche (121) recherche en outre dans la base de données (140) un autre diagramme de structure de commande similaire (213) incluant un sous-ensemble de commandes qui correspond ou est similaire à un sous-ensemble de commandes extrait du diagramme de structure de commande (213) dont l'entrée est reçue par l'unité d'entrée (111), et acquiert à partir de la base de données (140) un scénario de risque incluant un nœud ayant une relation de correspondance avec un sous-ensemble de commandes inclus dans l'autre diagramme de structure de commande similaire (213).

4. Dispositif d'assistance à l'analyse de risques selon la revendication 1, comprenant en outre :
une unité de capture (130) qui capture le scénario de risque sorti dans une structure arborescente par l'unité de sortie (123) en tant que scénario de risque correspondant au diagramme de structure de commande (213) dont l'entrée est reçue par l'unité d'entrée (111), et accumule le scénario de risque dans la base de données (140).

5. Dispositif d'assistance à l'analyse de risques selon la revendication 4, dans lequel,
lorsqu'elle capture une pluralité de scénarios de risque sortis dans une structure arborescente par l'unité de sortie (123) en tant que scénarios de risque correspondant au diagramme de structure de commande (213) dont l'entrée est reçue par l'unité d'entrée (111) et accumule la pluralité de scénarios de risque dans la base de données (140), l'unité de capture (130) relie les scénarios de risque ayant le même sommet parmi la pluralité de scénarios de risque à une structure arborescente ayant le même sommet.

6. Dispositif d'assistance à l'analyse de risques selon la revendication 4, dans lequel
l'unité de capture (130) affiche le scénario de risque sorti dans une structure arborescente par l'unité de sortie (123) sur une unité d'affichage d'une manière éditable et reçoit l'édition, et capture le scénario de risque édité en tant que scénario de risque correspondant au diagramme de structure de commande (213) dont l'entrée est reçue par l'unité d'entrée (111) et accumule le scénario de risque dans la base de données (140).

7. Dispositif d'assistance à l'analyse de risques selon la revendication 4, dans lequel,
lorsqu'un bloc ou une commande ayant une relation de correspondance avec un nœud du scénario de risque capturé n'existe pas dans le diagramme de structure de commande (213) dont l'entrée est reçue par l'unité d'entrée (111), l'unité de capture accumule le scénario de risque dans la base de données (140) dans laquelle le nœud sert de nœud ayant des informations de mot guide et des informations de structure arborescente.

8. Dispositif d'assistance à l'analyse de risques selon la revendication 1, comprenant en outre :
une unité de génération (122) qui est connectée à une base de données de modèles (150) qui accumule un scénario modèle dans lequel chaque nœud présente des informations de mot guide et des informations de structure arborescente, et génère un scénario de risque sur la base d'un modèle accumulé dans la base de données de modèles lorsque le diagramme de structure de commande similaire (213) incluant un sous-ensemble de commandes qui correspond ou est similaire à un sous-ensemble de commandes extrait du diagramme de structure de commande (213) dont l'entrée est reçue par l'unité d'entrée (111) n'existe pas dans la base de données (140), dans lequel
l'unité de sortie (123) sort le scénario de risque généré par l'unité de génération (122) dans une structure arborescente.

9. Dispositif d'assistance à l'analyse de risques selon la revendication 1, dans lequel
l'unité de recherche (121) détermine une correspondance ou une similarité entre un sous-ensemble de commandes extrait du diagramme de structure de commande (213) dont l'entrée est reçue par l'unité d'entrée (111) et un sous-ensemble de commandes inclus dans le diagramme de structure de commande similaire (213) sur la base d'une similarité basée sur une distance d'édition d'un bloc ou d'une commande dans le diagramme de structure de commande (213) et le diagramme de structure de commande similaire (213).

10. Dispositif d'assistance à l'analyse de risques selon la revendication 9, dans lequel
l'unité de recherche (121) ajoute un point à la similarité lorsque le bloc exécutant correspond.

11. Dispositif d'assistance à l'analyse de risques selon la revendication 10, dans lequel
l'unité de recherche (121) ajoute un point à la similarité lorsque le bloc passif (704) correspond.

12. Procédé d'assistance à l'analyse de risques comprenant des étapes exécutées par un dispositif d'assistance à l'analyse de risques (100), dans lequel
le dispositif d'assistance à l'analyse de risques (100)
est connecté à une base de données (140) et reçoit une entrée d'une cible d'analyse de risques représentée sous la forme d'un diagramme de structure de commande (213), la base de données (140) accumulant (i) le diagramme de structure de commande (213) représentant la cible d'analyse de risques par un bloc (211) et une commande (212) montrant une relation entre un bloc exécutant la commande et un bloc passif (704) commandé par le bloc exécutant, et (ii) un scénario de risque qui correspond au diagramme de structure de commande (213) et est représenté par une structure arborescente dans laquelle chaque nœud a une relation de correspondance avec le bloc (211) ou la commande (212) du diagramme de structure de commande (213),
recherche dans la base de données un diagramme de structure de commande similaire (213) incluant un sous-ensemble de commandes qui correspond ou est similaire à un sous-ensemble de commandes extrait du diagramme de structure de commande (213) dont l'entrée est reçue par l'unité d'entrée (111), et acquiert à partir de la base de données (140) un scénario de risque incluant un nœud ayant une relation de correspondance avec un sous-ensemble de commandes inclus dans le diagramme de structure de commande similaire (213), et
sort le scénario de risque acquis dans une structure arborescente.

13. Programme d'assistance à l'analyse de risques qui fait fonctionner un ordinateur comme un dispositif d'assistance à l'analyse de risques, dans lequel
l'ordinateur fonctionne comme
une unité d'entrée (111) qui est connectée à une base de données (140) et reçoit une entrée d'une cible d'analyse de risques représentée sous la forme d'un diagramme de structure de commande (213), la base de données (140) accumulant :
(i) le diagramme de structure de commande (213) représentant la cible d'analyse de risques par un bloc (211) et une commande (212) montrant une relation entre un bloc exécutant la commande et un bloc passif (704) commandé par le bloc exécutant, et
(ii) un scénario de risque qui correspond au diagramme de structure de commande (213) et est représenté par une structure arborescente dans laquelle chaque noeud a une relation de correspondance avec le bloc (211) ou la commande (212) du diagramme de structure de commande (213),
une unité de recherche (121) qui recherche dans la base de données (140) un diagramme de structure de commande similaire (213) incluant un sous-ensemble de commandes qui correspond ou est similaire à un sous-ensemble de commandes extrait du diagramme de structure de commande (213) dont l'entrée est reçue par l'unité d'entrée (111), et acquiert à partir de la base de données (140) un scénario de risque incluant un nœud ayant une relation de correspondance avec un sous-ensemble de commandes inclus dans le diagramme de structure de commande similaire (213), et
une unité de sortie (123) qui sort le scénario de risque acquis par l'unité de recherche (121) dans une structure arborescente.
